# EUROPEAN PATENT SPECIFICATION

(11) **EP 4 478 319 B1**
(45) Date of publication and mention of the grant of the patent: **10.12.2025**
(21) Application number: 24179081.5
(22) Date of filing: 30.05.2024
(51) Int. Cl.: G08C 17/02

(54) **REMOTE CONTROL INVALIDATION DEVICE AND MOVING OBJECT**
FERNGESTEUERTE ENTWERTUNGSVORRICHTUNG UND SICH BEWEGENDES OBJEKT
DISPOSITIF D'INVALIDATION DE TÉLÉCOMMANDE ET OBJET MOBILE

(30) Priority: 15.06.2023 JP 2023098491
(43) Date of publication of application: 18.12.2024
(73) Proprietor: TOYOTA JIDOSHA KABUSHIKI KAISHA, Aichi-ken 471-8571 (JP)
(72) Inventor: IWAHORI, Kento, Toyota-Shi, 471-8571 (JP); IKEDA, Keigo, Toyota-Shi, 471-8571 (JP); YOKOYAMA, Daiki, Toyota-Shi, 471-8571 (JP)
(74) Representative: J A Kemp LLP

(56) References cited:
- KR-B1- 102 291 916
- US-A1- 2022 356 052

## Description

This application claims priority to Japanese Patent Application No. 2023-098491, filed June 15, 2023.

### BACKGROUND

### FIELD

The present disclosure relates to a remote control invalidation device and a moving object.

There is a known technique that causes a vehicle to run by remote control in a step of manufacturing the vehicle (for example, Japanese Patent Application Publication (Translation of PCT Application) No. 2017-538619).

If a moving object is movable by remote control, it is possible that the moving object will be controlled remotely by a third party. This arises a desire for a technique of invalidating remote control over the moving object at an appropriate moment.
US 2022/356052 A1 discloses a system and method for remotely controlling a vehicle. KR102291916B1 discloses a device for disabling the vehicle remote control through overvoltage/overcurrent control.

### SUMMARY

The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes. The present disclosure is feasible in the following aspects.
(1) According to a first aspect of the present disclosure, a remote control invalidation device is provided. The remote control invalidation device comprises: an invalidation signal transmission unit configured to perform a process of transmitting a signal to a moving object operable by remote control, the signal being for implementing invalidation of the remote control with timing of coming of a predetermined invalidation moment, or a process of transmitting a signal to the moving object with timing of coming of the invalidation moment, the signal being for implementing invalidation of the remote control.
   The remote control invalidation device of this aspect makes it possible to specify the invalidation moment in advance, thereby allowing remote control over the moving object to be invalidated at an appropriate moment.
(2) In the remote control invalidation device of the above-described aspect, the invalidation moment may be a moment before a delivery date of delivery of the moving object to a purchaser of the moving object.
   According to the remote control invalidation device of this aspect, it is possible to invalidate remote control over the moving object before the date of delivery of the moving object to the purchaser of the moving object.
(3) The remote control invalidation device of the above-described aspect may further comprise: an information acquisition unit configured to acquire information about a delivery date of delivery of the moving object to a purchaser of the moving object; and an invalidation moment determination unit configured to determine the invalidation moment using the information acquired by the information acquisition unit.
   According to the remote control invalidation device of this aspect, it is possible to determine the invalidation moment in response to the date of delivery of the moving object.
(4) The remote control invalidation device of the above-described aspect may further comprise: an information acquisition unit configured to acquire information about a procurement status of a part to form the moving object; and an invalidation moment determination unit configured to determine the invalidation moment using the information acquired by the information acquisition unit.
   According to the remote control invalidation device of this aspect, it is possible to determine the invalidation moment in response to a procurement status of a part.
(5) The remote control invalidation device of the above-described aspect may further comprise: an information acquisition unit configured to acquire at least one information of information about a delivery date of delivery of the moving object to a purchaser of the moving object and information about a procurement status of a part to form the moving object; and an invalidation moment determination unit configured to determine the invalidation moment using the at least one information acquired by the information acquisition unit, wherein the invalidation moment determination unit changes the determined invalidation moment in response to change occurring in the at least one information.
   According to the remote control invalidation device of this aspect, if a specified invalidation moment becomes inappropriate, it is possible to change the invalidation moment.
(6) In the remote control invalidation device of the above-described aspect, the moving object may invalidate the remote control reversibly and then invalidate the remote control irreversibly.
   According to the remote control invalidation device of this aspect, it is possible to maintain a state where it is possible to validate remote control until the remote control is invalidated irreversibly.
(7) The remote control invalidation device of the above-described aspect may further comprise:
   an invalidation moment determination unit configured to determine the invalidation moment, wherein the invalidation moment determination unit determines a first moment and a second moment after the first moment to be the invalidation moment. The invalidation signal transmission unit may perform a process of transmitting a signal for implementing reversible invalidation of the remote control with timing of coming of the first moment and for implementing irreversible invalidation of the remote control with timing of coming of the second moment, the signal being transmitted as the signal for implementing invalidation of the remote control with timing of coming of the invalidation moment.
   According to the remote control invalidation device of this aspect, it is possible to implement reversible invalidation and irreversible invalidation of remote control over the moving object at appropriate moments.
(8) The remote control invalidation device of the above-described aspect may further comprise:
   an invalidation moment determination unit configured to determine the invalidation moment, wherein the invalidation moment determination unit determines a first moment and a second moment after the first moment to be the invalidation moment. The invalidation signal transmission unit may perform a process of transmitting a signal with timing of coming of the first moment for implementing reversible invalidation of the remote control and transmitting a signal with timing of coming of the second moment for implementing irreversible invalidation of the remote control, the process being performed as the process of transmitting the signal with timing of coming of the invalidation moment for implementing invalidation of the remote control.
   According to the remote control invalidation device of this aspect, it is possible to implement reversible invalidation and irreversible invalidation of remote control over the moving object at appropriate moments.
(9) According to a second aspect of the present disclosure, a moving object operable by remote control is provided. The moving object comprises: an invalidation implementation unit configured to implement invalidation of the remote control in response to coming of a predetermined invalidation moment.

According to the moving object of this aspect, it is possible to invalidate remote control over the moving object at an appropriate moment.

The present disclosure is feasible in various aspects other than the remote control invalidation device and the moving object. For example, the present disclosure may be realized in aspects including a remote control invalidation system, a remote control invalidation method, a vehicle, a computer program, and a recording medium storing a computer program.

### BRIEF DESCRIPTION OF THE DRAWINGS

Fig. 1 is an explanatory view showing the configuration of a remote control invalidation system according to a first embodiment;
Fig. 2 is an explanatory view showing the configuration of a vehicle according to the first embodiment;
Fig. 3A is an explanatory view showing how vehicles move by remote control in a factory;
Fig. 3B is a flowchart showing a procedure of running control over the vehicle according to the first embodiment;
Fig. 4 is a flowchart showing a detail of an ordering process according to the first embodiment;
Fig. 5 is a flowchart showing a detail of an invalidation signal transmitting process according to the first embodiment;
Fig. 6 is a flowchart showing a detail of an invalidation implementing process according to the first embodiment;
Fig. 7 is an explanatory view showing how remote control over the vehicle is invalidated;
Fig. 8 is a flowchart showing a detail of an invalidation implementing process according to a second embodiment;
Fig. 9 is an explanatory view showing how remote control over the vehicle is invalidated;
Fig. 10 is an explanatory view showing the configuration of a remote control invalidation system according to a third embodiment;
Fig. 11 is a flowchart showing a detail of an invalidation signal transmitting process according to the third embodiment;
Fig. 12 is a flowchart showing a detail of an invalidation implementing process according to the third embodiment; and
Fig. 13 is an explanatory view showing how remote control over the vehicle is invalidated.

### DETAILED DESCRIPTION

### A. First Embodiment

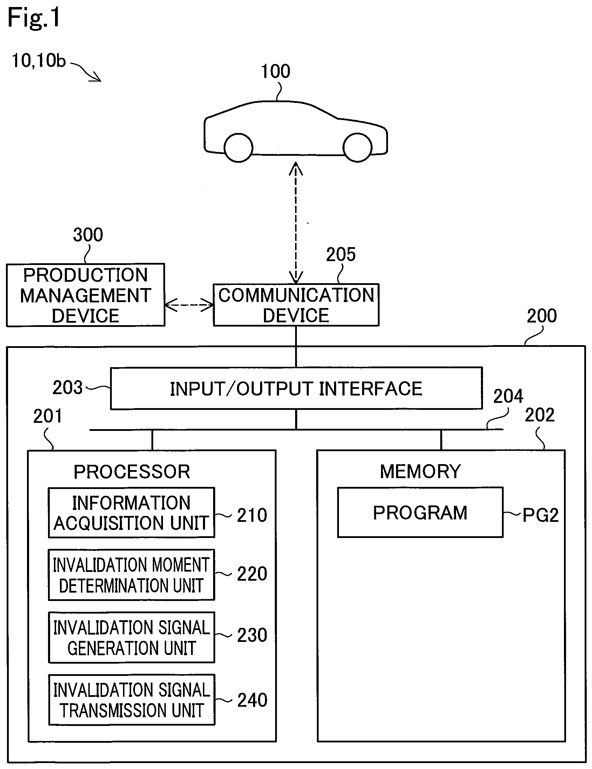

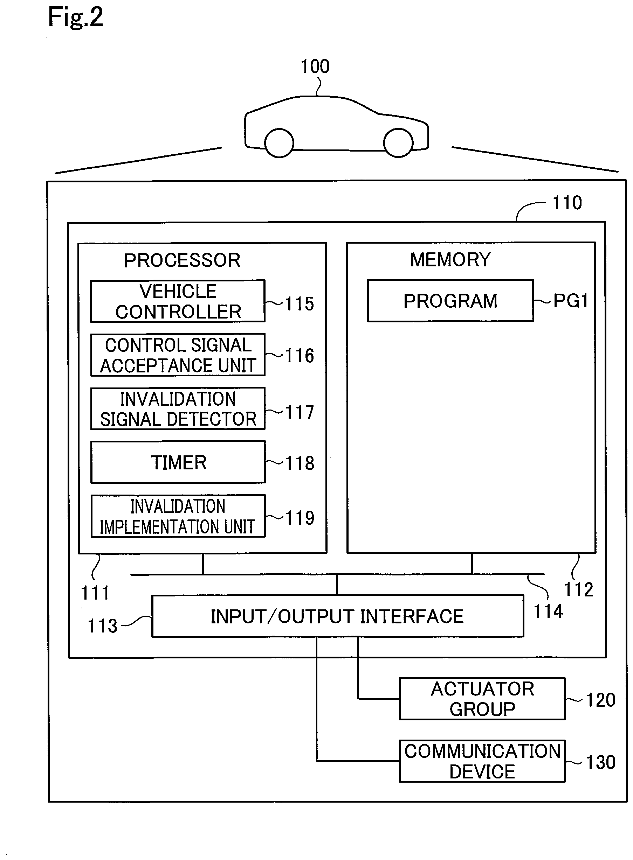

Fig. 1 is an explanatory view showing the configuration of a remote control invalidation system 10 according to a first embodiment. Fig. 2 is an explanatory view showing the configuration of a vehicle 100 according to the first embodiment. The remote control invalidation system 10 is used for invalidating remote control over a moving object. In the present disclosure, the term "invalidating" can be replaced with the term "deactivating" or the term "disabling."

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

As shown in Fig. 1, in the present embodiment, the remote control invalidation system 10 includes the vehicle 100 capable of performing operation by remote control, a remote control invalidation device 200 for disabling the operation of the vehicle 100 by remote control, and a production management device 300 for managing production of the vehicle 100. In the present embodiment, the remote control invalidation device 200 and the production management device 300 are arranged in a factory for manufacture of the vehicle 100. In the following description, disabling the operation by remote control will also be called invalidating the remote control. In the present disclosure, the operation by remote control does not include invalidation of the remote control.

As shown in Fig. 2, the vehicle 100 includes a vehicle control device 110 for controlling each part of the vehicle 100, an actuator group 120 to be driven under control by the vehicle control device 110, and a communication device 130 for communicating with the remote control invalidation device 200 and a remote control device 400 via radio communication. The actuator group 120 includes at least one actuator. In the present embodiment, the actuator group 120 includes an actuator of a driving device for accelerating the vehicle 100, an actuator of a steering device for changing a traveling direction of the vehicle 100, and an actuator of a braking device for decelerating the vehicle 100. The driving device includes a battery, a motor for running to be driven by power of the battery, and a driving wheel to be rotated by the motor for running. The actuator of the driving device includes the motor for running. The actuator group 120 may include an actuator for driving a wiper, an actuator for driving a door mirror, or an actuator for driving a power window of the vehicle 100, for example.

The vehicle control device 110 is configured using a computer including a processor 111, a memory 112, an input/output interface 113, and an internal bus 114. The processor 111, the memory 112, and the input/output interface 113 are connected via the internal bus 114 in a manner allowing bidirectional communication therebetween. The actuator group 120 and the communication device 130 are connected to the input/output interface 113.

The processor 111 executes a computer program PG1 stored in advance in the memory 112 to function as a vehicle controller 115, a control signal acceptance unit 116, an invalidation signal detector 117, a timer 118, and an invalidation implementation unit 119. The vehicle controller 115 controls the actuator group 120. The control signal acceptance unit 116 accepts a control signal transmitted from a remote control device for remote control over the vehicle 100. In the present embodiment, when a driver is on-board the vehicle 100, the vehicle controller 115 allows the vehicle 100 to run by controlling the actuator group 120 in response to operation by the driver. Independently of whether a driver is on-board the vehicle 100, the vehicle controller 115 allows the vehicle 100 to run by controlling the actuator group 120 in response to a control signal accepted by the control signal acceptance unit 116. In the present embodiment, the control signal acceptance unit 116 is in an operating state switched between a valid state where a control signal is accepted and an invalid state where the control signal is not accepted. In the following description, switching the control signal acceptance unit 116 to the invalid state will be called invalidating remote control. Switching the control signal acceptance unit 116 to the valid state will be called validating remote control.

The invalidation signal detector 117 detects an invalidation signal transmitted from the remote control invalidation device 200. In the present embodiment, the invalidation signal includes a command for implementing invalidation of remote control, and information indicating a moment of implementation of invalidation of the remote control. More specifically, in the present embodiment, the information indicating the moment of implementation of invalidation of the remote control is information indicating remaining time before the invalidation moment. The timer 118 detects coming of the invalidation moment. In the present embodiment, the timer 118 detects coming of the invalidation moment by counting down the remaining time before the invalidation moment. If the timer 118 detects coming of the invalidation moment, the invalidation implementation unit 119 switches the control signal acceptance unit 116 to the invalid state. In other words, the invalidation implementation unit 119 invalidates remote control over the vehicle 100 with timing of detection of coming of the invalidation moment by the timer 118. The invalidation implementation unit 119 invalidates remote control over the vehicle 100 reversibly or irreversibly. Invalidating remote control reversibly means invalidation implemented in such a manner as to allow the remote control to be validated again. Invalidating remote control irreversibly means invalidation implemented in such a manner as to prohibit the remote control from being validated again. To invalidate remote control reversibly, the invalidation implementation unit 119 makes the remote control unavailable unless verification as to the presence of a right to validate the remote control is cleared, for example. To invalidate remote control irreversibly, the invalidation implementation unit 119 makes the remote control unavailable by deleting a part relating to the remote control from the computer program PG1 stored in the memory 112, for example. If a relay to be opened and closed irreversibly is provided between the vehicle control device 110 and the communication device 130, the invalidation implementation unit 119 may invalidate remote control irreversibly by interrupting connection between the vehicle control device 110 and the communication device 130 through opening and closing of the relay. The invalidation implementation unit 119 may invalidate remote control irreversibly by fusing a circuit with a current.

As shown in Fig. 1, the remote control invalidation device 200 is configured using a computer including a processor 201, a memory 202, an input/output interface 203, and an internal bus 204. The processor 201, the memory 202, and the input/output interface 203 are connected via the internal bus 204 in a manner allowing bidirectional communication therebetween. A communication device 205 for communicating with the vehicle 100 via radio communication is connected to the input/output interface 203.

The processor 201 executes a computer program PG2 stored in advance in the memory 202 to function as an information acquisition unit 210, an invalidation moment determination unit 220, an invalidation signal generation unit 230, and an invalidation signal transmission unit 240. The information acquisition unit 210 acquires various types of information. In the present embodiment, the information acquisition unit 210 acquires information from the production management device 300 indicating a delivery date of delivery of the vehicle 100 to a purchaser having purchased the vehicle 100. The invalidation moment determination unit 220 determines an invalidation moment using the information acquired by the information acquisition unit 210. In the present embodiment, the invalidation moment determination unit 220 determines a certain moment to be the invalidation moment that is within a period from when the vehicle 100 is manufactured to when the vehicle 100 is delivered to the purchaser. More specifically, the invalidation moment determination unit 220 determines a certain time of a day previous to the delivery date of delivery of the vehicle 100 to the purchaser to be the invalidation moment. The invalidation signal generation unit 230 generates an invalidation signal for invalidating remote control over the vehicle 100. The invalidation signal transmission unit 240 transmits the invalidation signal generated by the invalidation signal generation unit 230 to the vehicle 100. The invalidation signal may also be called a signal simply.

The production management device 300 implements entire production management of the vehicle 100 in the factory. The production management device 300 is configured using at least one computer. The production management device 300 includes a communication device not shown in the drawings, and is capable of communicating with the remote control invalidation device 200 and with each facility inside or outside the factory via wire communication or radio communication. The production management device 300 manages various types of information including an ordering status of the vehicle 100, a procurement status of a part to form the vehicle 100, and a production status of the vehicle 100.

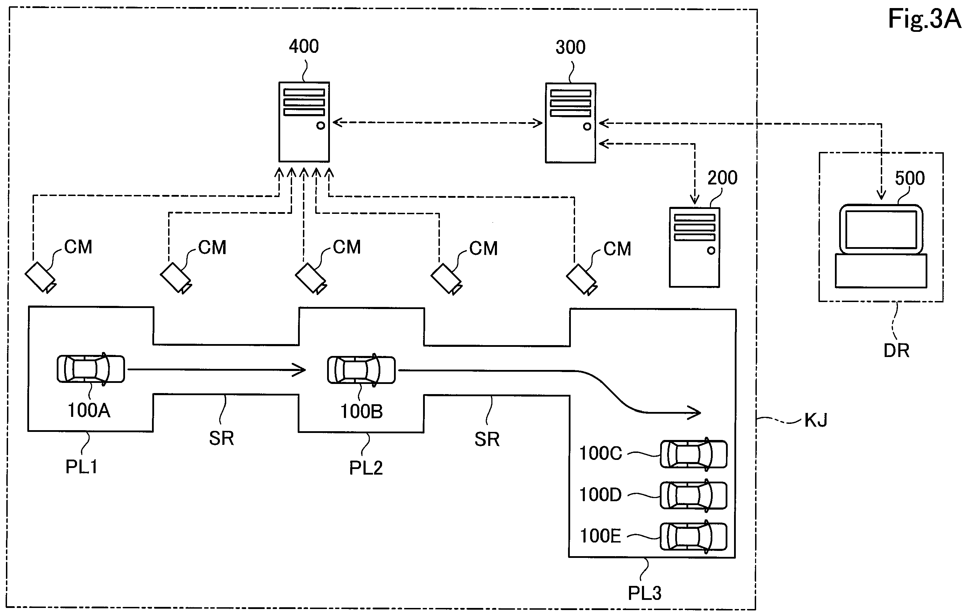

Fig. 3A is an explanatory view showing how vehicles 100 move by remote control in a factory KJ. Five vehicles 100A to 100E are illustrated in Fig. 3A. In the following, when the five vehicles 100A to 100E will be described without particular distinction therebetween, they will simply be called the vehicle 100. In the present embodiment, the remote control device 400 for remote control over the vehicle 100 is installed in the factory KJ for manufacture of the vehicle 100. The vehicle 100 runs in the factory KJ by being controlled remotely by the remote control device 400. The factory KJ has a first place PL1 for implementation of assembly of the vehicle 100, a second place PL2 for implementation of inspection on the vehicle 100, and a third place PL3 for storage of the vehicle 100 having passed the inspection. The first place PL1, the second place PL2, and the third place PL3 are connected to each other via a track SR allowing the vehicle 100 to run therethrough. The vehicle 100 having been assembled at the first place PL1 is equipped with the vehicle control device 110, the actuator group 120, and the communication device 130. The vehicle 100 having been assembled at the first place PL1 runs from the first place PL1 to the second place PL2 by being controlled remotely by the remote control device 400. The vehicle 100 having passed the inspection at the second place PL2 runs from the second place PL2 to the third place PL3 by being controlled remotely by the remote control device 400. After the vehicle 100 arrives at the third place PL3, the vehicle 100 is shipped from the factory KJ. The vehicle 100 shipped from the factory KJ is conveyed to a dealer DR and delivered to a purchaser.

The following describes a method by which the remote control device 400 moves the vehicle 100 by remote control. The remote control device 400 determines a target route along which the vehicle 100 is to run to a destination through the track SR. The factory KJ is equipped with a plurality of cameras CM for capturing images of the track SR. The remote control device 400 is capable of acquiring the location and position of the vehicle 100 relative to the target route in real time by analyzing images captured by the corresponding cameras CM. In the present embodiment, the target route means a reference route described later. The remote control device 400 generates a control signal for causing the vehicle 100 to run along the target route, and transmits the control signal to the vehicle 100. The control signal indicates a target value of an acceleration of the vehicle 100 or a target value of a rudder angle of the vehicle 100, for example. The vehicle control device 110 mounted on the vehicle 100 controls the actuator group 120 in response to the received control signal, thereby causing the vehicle 100 to run. This makes it possible to move the vehicle 100 without using a conveyance device such as a crane or a conveyor. In the following description, the control signal for causing the vehicle 100 to run may also be called a running control signal.

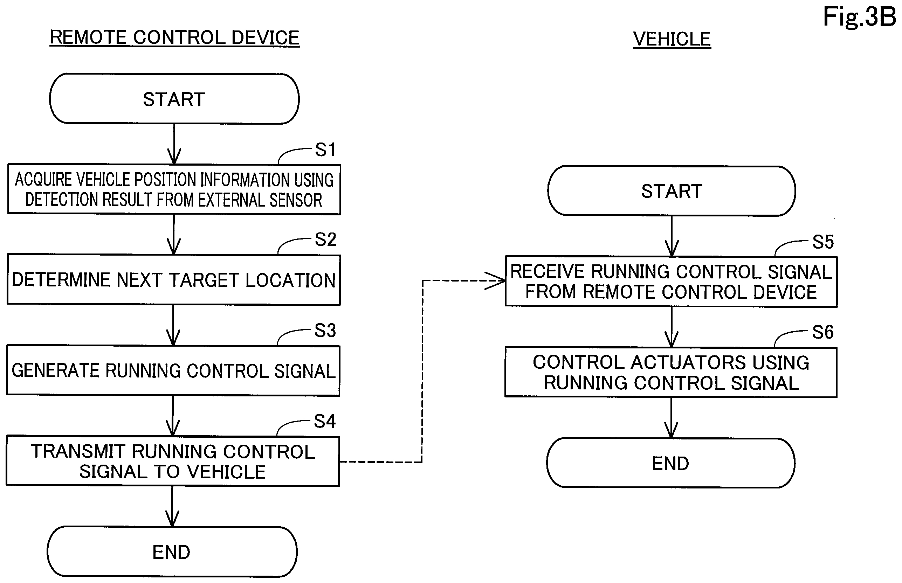

Fig. 3B is a flowchart illustrating a process procedure of running control of the vehicle 100 in the first embodiment. Step S1 to step S4 are repeatedly executed by a processor of the remote control device 400, whereas step S5 to step S6 are repeatedly executed by the processor 111 of the vehicle control device 110. In the step S1, the remote control device 400 acquires vehicle location information of the vehicle 100 using detection results output from the external sensor, which is a sensor located outside the vehicle 100. The vehicle location information is position information that serves as the basis for generating running control signals. In the present embodiment, the vehicle location information includes the position and orientation of the vehicle 100 in the reference coordinate system of the factory KJ. In the present embodiment, the reference coordinate system of the factory KJ is the global coordinate system, and any location in the factory KJ is expressed with X, Y, and Z coordinates in the global coordinate system. In the present embodiment, the external sensor is the camera CM, and the external sensor outputs a captured image as a detection result. That is, in the step S1, the remote control device 400 acquires the vehicle location information using captured images acquired from the camera CM, which is the external sensor.

More specifically, in step S1, the remote control device 400 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model using artificial intelligence, for example. The detection model is prepared in the remote control invalidation system 10 or outside the remote control invalidation system 10. The detection model is stored in advance in a memory of the remote control device 400, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The remote control device 400 can acquire the orientation of the vehicle 100 through estimation based on the direction of a motion vector of the vehicle 100 detected from change in location of a feature point of the vehicle 100 between frames of the captured images using optical flow process, for example.

In step S2, the remote control device 400 determines a target location to which the vehicle 100 is to move next. In the present embodiment, the target location is expressed by X, Y, and Z coordinates in the global coordinate system. The memory of the remote control device 400 contains the reference route stored in advance as a route along which the vehicle 100 is to run. The route is expressed by a node indicating a departure place, a node indicating a way point, a node indicating a destination, and a link connecting nodes to each other. The remote control device 400 determines the target location to which the vehicle 100 is to move next using the vehicle location information and the reference route. The remote control device 400 determines the target location on the reference route ahead of a current location of the vehicle 100.

In step S3, the remote control device 400 generates a running control signal for causing the vehicle 100 to run toward the determined target location. In the present embodiment, the running control signal includes an acceleration and a steering angle of the vehicle 100 as parameters. The remote control device 400 calculates a running speed of the vehicle 100 from transition of the location of the vehicle 100 and makes comparison between the calculated running speed and a target speed of the vehicle 100 determined in advance. If the running speed is lower than the target speed, the remote control device 400 generally determines an acceleration in such a manner as to accelerate the vehicle 100. If the running speed is higher than the target speed as, the remote control device 400 generally determines an acceleration in such a manner as to decelerate the vehicle 100. If the vehicle 100 is on the reference route, The remote control device 400 determines a steering angle and an acceleration in such a manner as to prevent the vehicle 100 from deviating from the reference route. If the vehicle 100 is not on the reference route, in other words, if the vehicle 100 deviates from the reference route, the remote control device 400 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S4, the remote control device 400 transmits the generated running control signal to the vehicle 100. The remote control device 400 repeats the acquisition of vehicle location information, the determination of a target location, the generation of a running control signal, the transmission of the running control signal, and others in a predetermined cycle.

In step S5, the vehicle control device 110 of the vehicle 100 receives the running control signal transmitted from the remote control device 400. In step S6, the vehicle control device 110 controls the actuator group 120 using the received running control signal, thereby causing the vehicle 100 to run at the acceleration and the steering angle indicated by the running control signal. The vehicle control device 110 repeats the reception of a running control signal and the control over the actuator group 120 in a predetermined cycle.

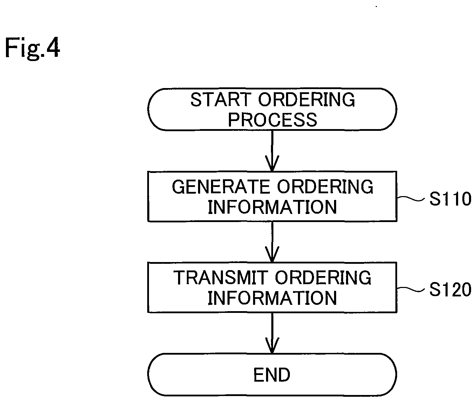

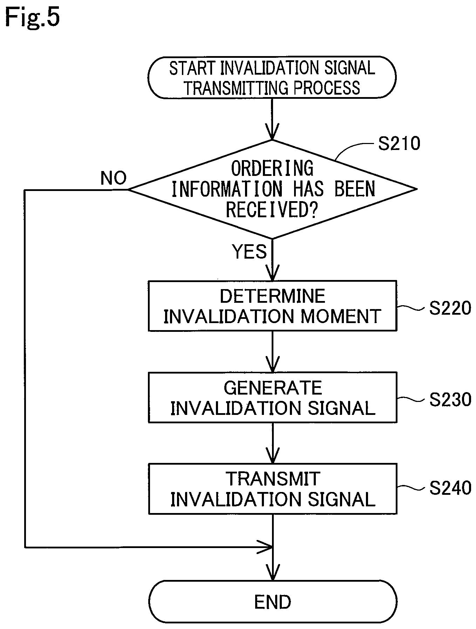

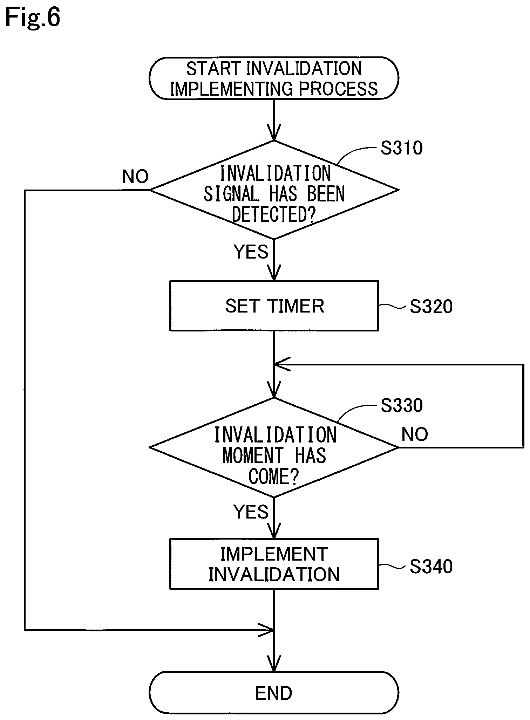

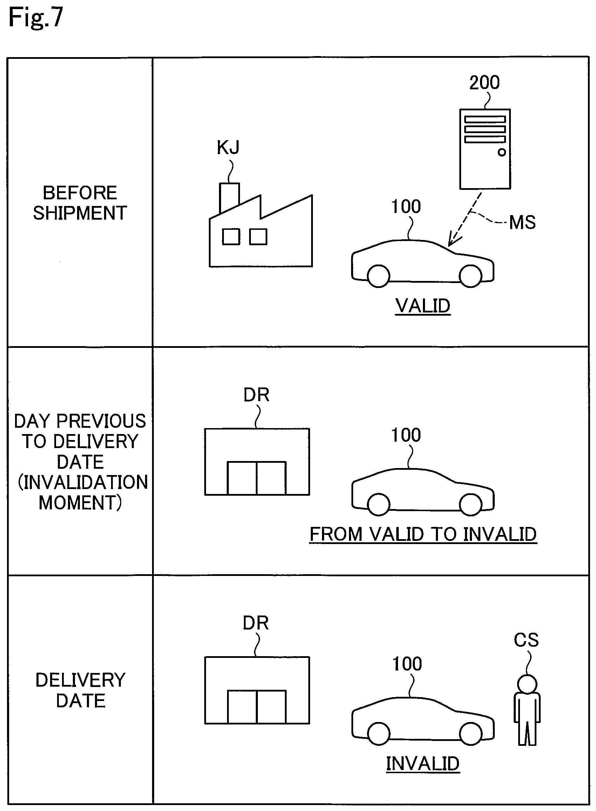

Fig. 4 is a flowchart showing a detail of an ordering process performed by the ordering device 500 arranged at the dealer DR. Fig. 5 is a flowchart showing a detail of an invalidation signal transmitting process performed by the remote control invalidation device 200. Fig. 6 is a flowchart showing a detail of an invalidation implementing process performed by the vehicle 100. Fig. 7 is an explanatory view showing how remote control over the vehicle 100 is invalidated. A remote control invalidation method implemented by the remote control invalidation system 10 will be described using Figs. 4 to 7.

The ordering process shown in Fig. 4 is performed by the ordering device 500. When the ordering process is started, the ordering device 500 generates ordering information in step S110 according to a detail of an order from a purchaser. The ordering information includes information about a vehicle type, a grade, an optional item, a dealer, and a person in charge at the dealer, for example. In step S120, the ordering device 500 transmits the ordering information to the production management device 300. Then, the ordering device 500 finishes the ordering process.

The invalidation signal transmitting process shown in Fig. 5 is performed repeatedly by the remote control invalidation device 200. When the invalidation signal transmitting process is started, the information acquisition unit 210 judges in step S210 whether the production management device 300 has received ordering information. If it is judged in step S210 that the ordering information has not been received, the remote control invalidation device 200 skips steps after step S210 and finishes the invalidation signal transmitting process.

If it is judged in step S210 that the ordering information has been received, the invalidation moment determination unit 220 determines an invalidation moment in step S220. In the present embodiment, the invalidation moment determination unit 220 acquires information indicating a date of delivery of the vehicle 100 from the production management device 300, and determines a moment before the delivery date to be the invalidation moment. In the present embodiment, the invalidation moment determination unit 220 determines a certain time of a day previous to the delivery date to be the invalidation moment. The certain time is not particularly limited but is settable to 10 pm, for example.

In step S230, the invalidation signal generation unit 230 generates an invalidation signal. In the present embodiment, the invalidation signal generation unit 230 generates the invalidation signal for invalidating remote control at the certain time of the day previous to the delivery date over the vehicle 100 to be delivered. In step S240, the invalidation signal transmission unit 240 transmits the invalidation signal to the vehicle 100 to be delivered. Then, the remote control invalidation device 200 finishes the invalidation signal transmitting process.

The invalidation implementing process shown in Fig. 6 is performed repeatedly by the vehicle control device 110 in a state where remote control is valid. When the invalidation implementing process is started, the invalidation signal detector 117 judges in step S310 whether an invalidation signal has been received. If it is judged in step S310 that the invalidation signal has not been received, the vehicle control device 110 skips steps after step S310 and finishes the invalidation implementing process. If it is judged in step S310 that the invalidation signal has been received, the invalidation signal detector 117 causes the timer 118 to start counting down remaining time before an invalidation moment in step S320.

In step S330, the invalidation implementation unit 119 judges using the timer 118 whether the invalidation moment has come. If it is judged in step S330 that the invalidation moment has not come, the invalidation implementation unit 119 repeats the process of step S330 until it is judged in step S330 that the invalidation moment has come. If a signal for canceling invalidation of remote control is received, the invalidation implementation unit 119 may stop the invalidation implementing process without waiting for a judgment in step S330 that the invalidation moment has come. If it is judged in step S330 that the invalidation moment has come, the invalidation implementation unit 119 implements invalidation of remote control in step S340. Then, the vehicle control device 110 finishes the invalidation implementing process.

As shown in Fig. 7, an invalidation signal MS is transmitted from the remote control invalidation device 200 to the vehicle 100 before the vehicle 100 is shipped from the factory KJ. In the vehicle 100 having received the invalidation signal MS, the timer 118 starts counting down to an invalidation moment. In Fig. 7, the invalidation moment is a certain time of a day previous to a date of delivery of the vehicle 100 to a purchaser CS. When the timer 118 detects coming of the certain time as the invalidation moment that is a time of the day previous to the delivery date, the invalidation implementation unit 119 is actuated to invalidate remote control over the vehicle 100. The vehicle 100 in a state where remote control is invalidated is delivered to the purchaser CS on the delivery date.

The remote control invalidation system 10 of the present embodiment described above allows remote control over the vehicle 100 to be invalidated in a period from when a step of moving the vehicle 100 by remote control is finished to when the vehicle 100 is delivered to the purchaser CS. Thus, it is possible to invalidate remote control over the vehicle 100 at an appropriate moment. In the present embodiment, remote control over the vehicle 100 is not invalidated before a certain time of a day previous to a date of delivery of the vehicle 100. This allows the vehicle 100 to be moved by remote control at the dealer DR if the remote control device 400 or the camera CM for acquiring the location and position of the vehicle 100 is located at the dealer DR. Thus, it is possible for the vehicle 100 to be moved at the dealer DR without having to be driven by a worker at the dealer DR, for example.

### B. Second Embodiment

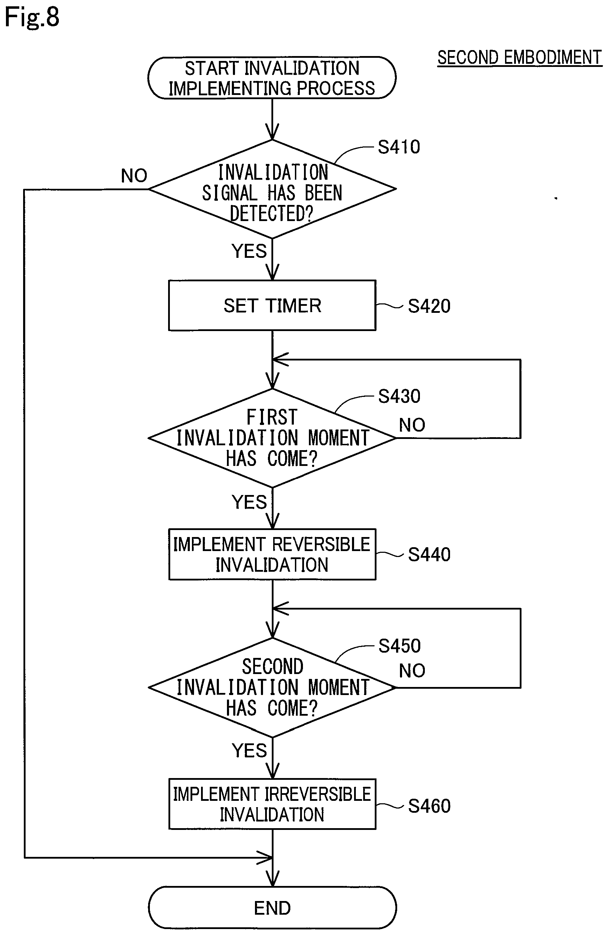

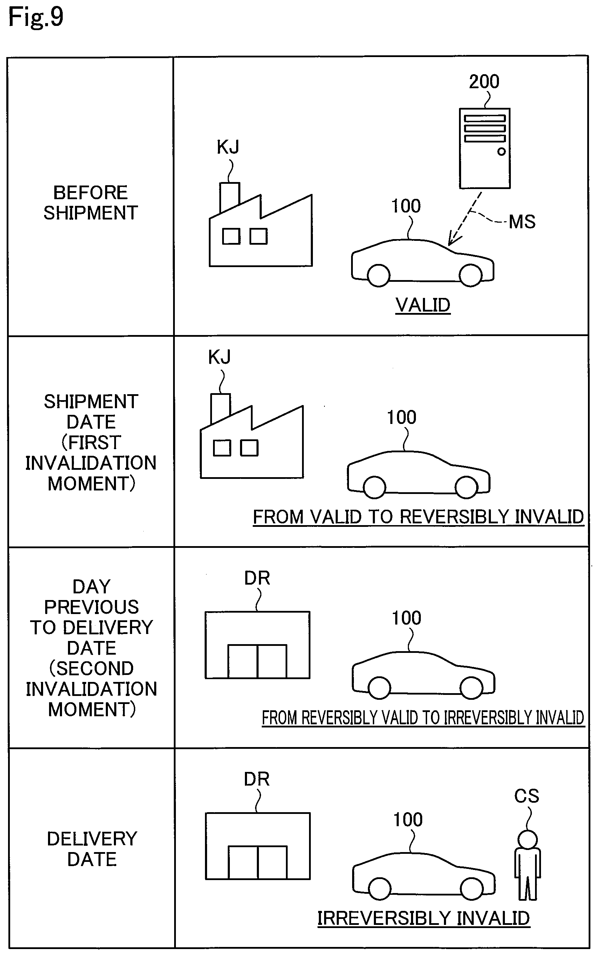

Fig. 8 is a flowchart showing a detail of an invalidation implementing process performed by a remote control invalidation system 10b according to a second embodiment. Fig. 9 is an explanatory view showing how remote control over the vehicle 100 is invalidated in the remote control invalidation system 10b according to the second embodiment. The remote control invalidation system 100b of the second embodiment differs from that of the first embodiment in that remote control over the vehicle 100 is invalidated reversibly and then remote control over the vehicle 100 is invalidated irreversibly. Unless specifically stated, the configuration of the second embodiment is otherwise the same as that of the first embodiment.

In the present embodiment, the invalidation moment determination unit 220 determines a first invalidation moment of invalidating remote control over the vehicle 100 reversibly and a second invalidation moment of invalidating remote control over the vehicle 100 irreversibly. The second invalidation moment is a moment after the first invalidation moment. The first invalidation moment may be called a first moment and the second invalidation moment may be called a second moment.

When the invalidation implementing process shown in Fig. 8 is started, the invalidation signal detector 117 judges in step S410 whether an invalidation signal has been received. If it is judged in step S410 that the invalidation signal has not been received, the vehicle control device 110 skips steps after step S410 and finishes the invalidation implementing process. If it is judged in step S410 that the invalidation signal has been received, the invalidation signal detector 117 causes the timer 118 to start counting down remaining time before the first invalidation moment and counting down remaining time before the second invalidation moment in step S420.

In step S430, the invalidation implementation unit 119 judges using the timer 118 whether the first invalidation moment has come. If it is judged in step S430 that the first invalidation moment has not come, the invalidation implementation unit 119 repeats the process of step S430 until it is judged in step S430 that the first invalidation moment has come. If a signal for canceling invalidation of remote control is received, the invalidation implementation unit 119 may stop the invalidation implementing process without waiting for a judgment in step S430 that the first invalidation moment has come. If it is judged in step S430 that the first invalidation moment has come, the invalidation implementation unit 119 implements reversible invalidation of remote control in step S440.

In step S450, the invalidation implementation unit 119 judges using the timer 118 whether the second invalidation moment has come. If it is judged in step S450 that the second invalidation moment has not come, the invalidation implementation unit 119 repeats the process of step S450 until it is judged in step S450 that the second invalidation moment has come. If a signal for canceling invalidation of remote control is received, the invalidation implementation unit 119 may stop the invalidation implementing process without waiting for a judgment in step S450 that the second invalidation moment has come. If it is judged in step S450 that the second invalidation moment has come, the invalidation implementation unit 119 implements irreversible invalidation of remote control in step S460. Then, the vehicle control device 110 finishes the invalidation implementing process.

As shown in Fig. 9, the invalidation signal MS is transmitted from the remote control invalidation device 200 to the vehicle 100 before the vehicle 100 is shipped from the factory KJ. In Fig. 9, the first invalidation moment is a certain time of a date of shipment of the vehicle 100 from the factory KJ, and the second invalidation moment is a certain time of a day previous to a date of delivery of the vehicle 100 to the purchaser CS. When the timer 118 detects coming of the certain time as the first invalidation moment that is a time of the shipment date, the invalidation implementation unit 119 invalidates remote control over the vehicle 100 reversibly. When the timer 118 detects coming of the certain time as the second invalidation moment that is a time of the day previous to the delivery date, the invalidation implementation unit 119 invalidates remote control over the vehicle 100 irreversibly. The vehicle 100 in a state where remote control is invalidated irreversibly is delivered to the purchaser CS on the delivery date.

The remote control invalidation system 10b of the present embodiment described above allows remote control over the vehicle 100 to be invalidated reversibly at the first invalidation moment and allows remote control over the vehicle 100 to be invalidated irreversibly at the second invalidation moment.

### C. Third Embodiment

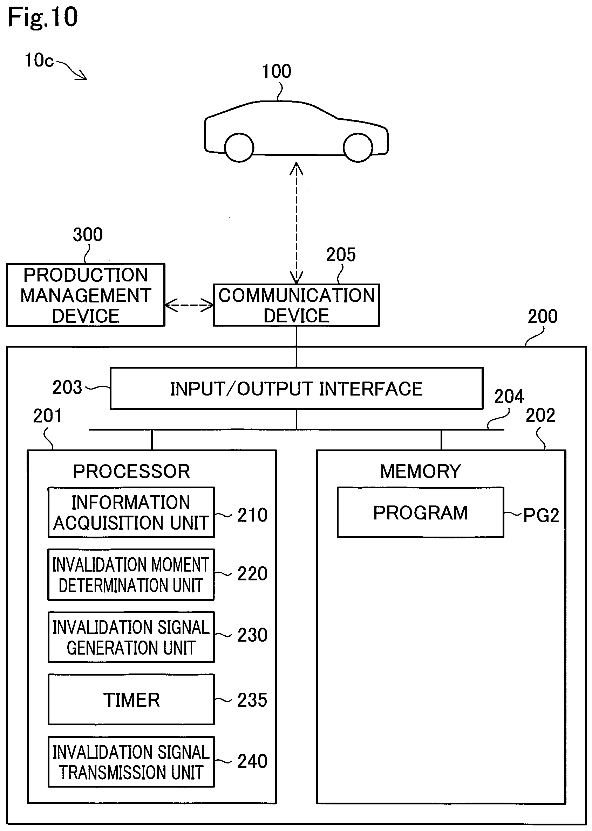

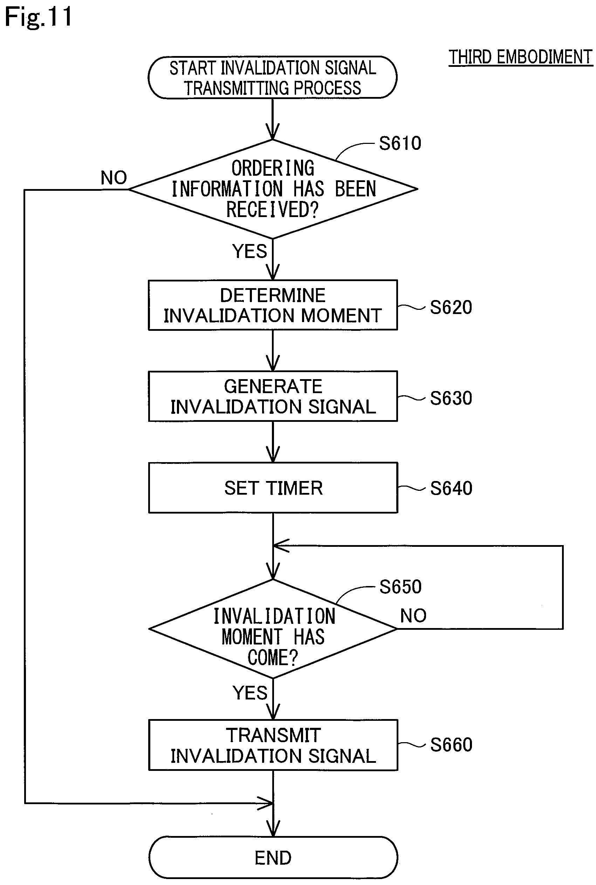

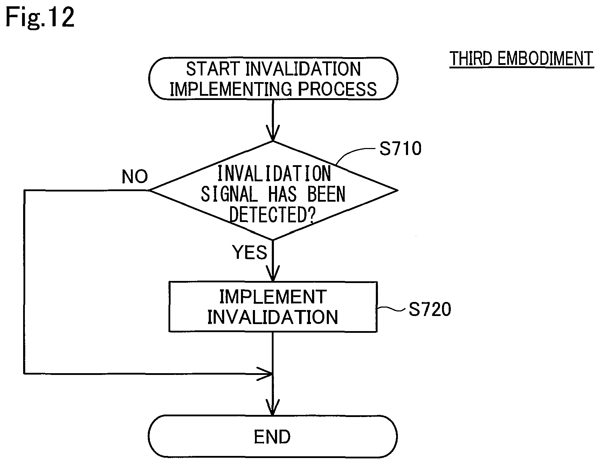

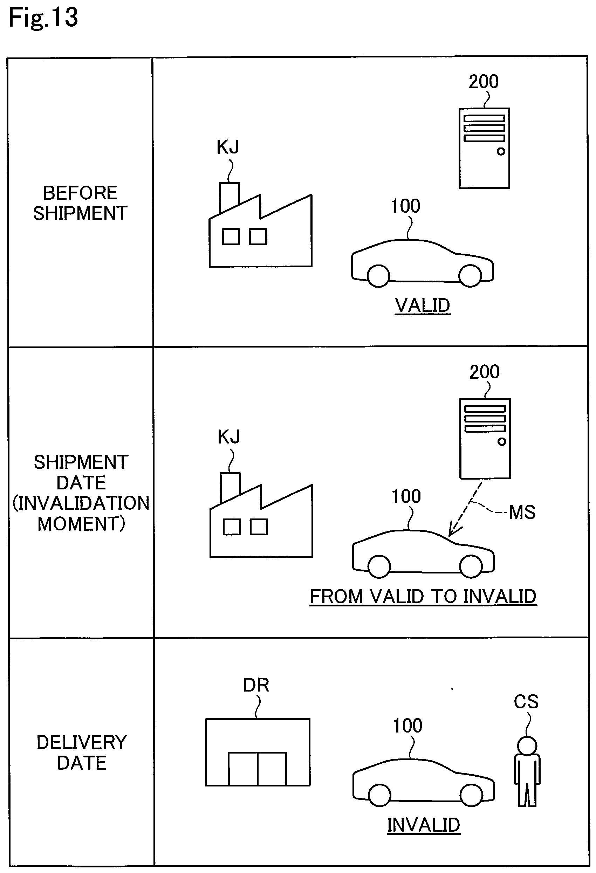

Fig. 10 is an explanatory view showing the configuration of a remote control invalidation system 10c according to a third embodiment. Fig. 11 is a flowchart showing a detail of an invalidation signal transmitting process performed by the remote control invalidation device 200 according to the third embodiment. Fig. 12 is a flowchart showing a detail of an invalidation implementing process performed by the vehicle 100 according to the third embodiment. Fig. 13 is an explanatory view showing how remote control over the vehicle 100 is invalidated in the remote control invalidation system 10c according to the third embodiment. The remote control invalidation system 10c of the third embodiment differs from that of the first embodiment in that coming of an invalidation moment is detected by the remote control invalidation device 200, not by the vehicle 100. Unless specifically stated, the configuration of the third embodiment is otherwise the same as that of the first embodiment.

In the present embodiment, the processor 201 of the remote control invalidation device 200 executes the computer program PG2 stored in advance in the memory 202 to function as a timer 235 for detecting coming of an invalidation moment, in addition to functioning as the information acquisition unit 210, the invalidation moment determination unit 220, the invalidation signal generation unit 230, and the invalidation signal transmission unit 240. In the present embodiment, the timer 118 shown in Fig. 2 is omissible from the vehicle 100.

When the invalidation signal transmitting process shown in Fig. 11 is started, the information acquisition unit 210 judges in step S610 whether the production management device 300 has received ordering information. If it is judged in step S610 that the ordering information has not been received, the remote control invalidation device 200 skips steps after step S610 and finishes the invalidation signal transmitting process.

If it is judged in step S610 that the ordering information has been received, the invalidation moment determination unit 220 determines an invalidation moment in step S620. In step S630, the invalidation signal generation unit 230 generates an invalidation signal. In the present embodiment, information about the invalidation moment is omissible from the invalidation signal generated by the invalidation signal generation unit 230. In step S640, the invalidation signal generation unit 230 causes the timer 235 to start counting down remaining time before the invalidation moment.

In step S650, the invalidation signal transmission unit 240 judges using the timer 235 whether the invalidation moment has come. If it is judged in step S650 that the invalidation moment has not come, the invalidation signal transmission unit 240 repeats the process of step S650 until it is judged in step S650 that the invalidation moment has come. If invalidation of remote control is determined to be canceled, the invalidation signal transmission unit 240 may stop the invalidation signal transmitting process without waiting for a judgment in step S650 that the invalidation moment has come. If it is judged in step S650 that the invalidation moment has come, the invalidation signal transmission unit 240 transmits the invalidation signal to the vehicle 100 to be delivered in step S660. Then, the remote control invalidation device 200 finishes the invalidation signal transmitting process.

When the invalidation implementing process shown in Fig. 12 is started, the invalidation signal detector 117 judges in step S710 whether an invalidation signal has been received. If it is judged in step S710 that the invalidation signal has not been received, the vehicle control device 110 skips steps after step S710 and finishes the invalidation implementing process. If it is judged in step S710 that the invalidation signal has been received, the invalidation implementation unit 119 implements invalidation of remote control in step S720. Then, the vehicle control device 110 finishes the invalidation implementing process.

As shown in Fig. 13, the remote control invalidation device 200 determines an invalidation moment before shipment from the factory KJ. In Fig. 13, the invalidation moment is a certain time of a date of shipment of the vehicle 100 from the factory KJ. When the timer 235 detects coming of the certain time as the invalidation moment that is a time of the shipment date, the invalidation signal transmission unit 240 transmits an invalidation signal to the vehicle 100 and the invalidation implementation unit 119 invalidates remote control over the vehicle 100 in response to the invalidation signal. The vehicle 100 in a state where remote control is invalidated is delivered to the purchaser CS on a delivery date.

The remote control invalidation system 10c of the present embodiment described above allows remote control over the vehicle 100 to be invalidated at an appropriate moment.

### D. Other Embodiments

(D1) In each of the remote control invalidation systems 10 to 10c of the corresponding embodiments described above, the invalidation moment determination unit 220 may change an invalidation moment after determining the invalidation moment. For example, the invalidation moment determination unit 220 may judge whether information about a date of delivery of the vehicle 100 has been changed, and may change an invalidation moment if the information about the date of delivery of the vehicle 100 is judged to have been changed. It is possible for the invalidation moment determination unit 220 to judge whether the information about the delivery date has been changed by acquiring the latest information about the delivery date from the production management device 300. It is possible for the invalidation moment determination unit 220 to change the invalidation moment about the vehicle 100 using the latest information about the delivery date. If an invalidation moment is changed in the remote control invalidation system 10 of the first embodiment, it is possible for the invalidation signal generation unit 230 to generate a new invalidation signal including information about the changed invalidation moment, and for the invalidation signal transmission unit 240 to transmit the new invalidation signal to the vehicle 100. It is possible for the invalidation signal detector 117 having detected the new invalidation signal to reset the timer 118 in such a manner as to detect coming of the changed invalidation moment. In the remote control invalidation system 10b of the second embodiment, the invalidation moment determination unit 220 may change at least one of the first invalidation moment and the second invalidation moment. If an invalidation moment is changed in the remote control invalidation system 10c of the third embodiment, it is possible for the invalidation signal generation unit 230 to generate a new invalidation signal including information about the changed invalidation moment, and to reset the timer 235 in such a manner as to detect coming of the changed invalidation moment. When the timer 235 detects coming of the changed invalidation moment, it is possible for the invalidation signal transmission unit 240 to transmit the new invalidation signal to the vehicle 100. The invalidation moment determination unit 220 may change an invalidation moment in response to change in information about a procurement status of a part to form the vehicle 100 instead of change in information about a date of delivery of the vehicle 100. The invalidation moment determination unit 220 may change an invalidation moment in response to change in at least one information of information about a date of delivery of the vehicle 100 and information about a procurement status of a part to form the vehicle 100.
(D2) In each of the remote control invalidation systems 10 to 10c of the corresponding embodiments described above, the invalidation moment determination unit 220 to determine an invalidation moment about the vehicle 100 is omissible from the remote control invalidation device 200. For example, the production management device 300 may determine an invalidation moment about the vehicle 100, and the invalidation signal generation unit 230 may generate an invalidation signal including information about the invalidation moment determined by the production management device 300.
(D3) In each of the remote control invalidation system 10 of the first embodiment and the remote control invalidation system 10c of the third embodiment described above, the invalidation moment determination unit 220 determines a certain time of a day previous to a date of delivery of the vehicle 100 to the purchaser CS at the dealer DR to be an invalidation moment. Meanwhile, the invalidation moment determination unit 220 may determine a certain time of the same day of the date of delivery of the vehicle 100 to the purchaser CS at the dealer DR to be an invalidation moment. The invalidation moment determination unit 220 may determine a certain date and time before the day previous to the date of delivery of the vehicle 100 to the purchaser CS at the dealer DR to be an invalidation moment. For example, the invalidation moment determination unit 220 may determine a certain time of a day previous to a date of delivery of the vehicle 100 to the dealer DR to be an invalidation moment. The invalidation moment determination unit 220 may determine a certain time of a date of shipment of the vehicle 100 from the factory KJ to be an invalidation moment. The invalidation moment determination unit 220 may determine a certain date and time after the date of delivery of the vehicle 100 to the purchaser CS at the dealer DR to be an invalidation moment.
(D4) In the remote control invalidation system 10b of the second embodiment described above, the invalidation moment determination unit 220 determines a certain time of a date of shipment of the vehicle 100 from the factory KJ to be the first invalidation moment, and determines a certain time of a day previous to a date of delivery of the vehicle 100 to the purchaser CS to be the second invalidation moment. Meanwhile, the first invalidation moment may be a certain date and time before the date of shipment of the vehicle 100 from the factory KJ, or may be a certain date and time after the date of shipment of the vehicle 100 from the factory KJ. The second invalidation moment may be a certain date and time before the day previous to the date of delivery of the vehicle 100 to the purchaser CS, or may be a certain date and time after the day previous to the date of delivery of the vehicle 100 to the purchaser CS.
(D5) In each of the remote control invalidation systems 10 to 10c of the corresponding embodiments described above, the remote control invalidation device 200 may be integrated with the production management device 300. The remote control invalidation device 200 may be integrated with the remote control device 400. The remote control invalidation device 200 may be integrated with the production management device 300 and the remote control device 400.
(D6) In each of the remote control invalidation systems 10 to 10c of the corresponding embodiments described above, the information acquisition unit 210 and the invalidation moment determination unit 220 are provided at the remote control invalidation device 200. Meanwhile, the information acquisition unit 210 and the invalidation moment determination unit 220 may be provided at the vehicle control device 110 instead of the remote control invalidation device 200. In this case, it is possible to determine an invalidation moment at the vehicle 100.
(D7) In the remote control invalidation systems 10 to 10c of the respective embodiments described above, the external sensor is not limited to the camera CM but may be the distance measuring device, for example. The distance measuring device is a light detection and ranging (LiDAR) device, for example. In this case, detection result output from the external sensor may be three-dimensional point cloud data representing the vehicle 100. The remote control device 400 and the vehicle 100 may acquire the vehicle location information through template matching using the three-dimensional point cloud data as the detection result and reference point cloud data, for example.
(D8) In the remote control invalidation systems 10 to 10c of the respective embodiments described above, the remote control device 400 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
   (1) The remote control device 400 may acquire vehicle location information, determine a target location to which the vehicle 100 is to move next, and generate a route from a current location of the vehicle 100 indicated by the acquired vehicle location information to the target location. The remote control device 400 may generate a route to the target location between the current location and a destination or generate a route to the destination. The remote control device 400 may transmit the generated route to the vehicle 100. The vehicle 100 may generate a running control signal in such a manner as to cause the vehicle 100 to run along the route received from the remote control device 400 and control the actuator group 120 using the generated running control signal.
   (2) The remote control device 400 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
   (3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the remote control device 400 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.
(D9) In the remote control invalidation systems 10 to 10c of the respective embodiments described above, the remote control device 400 automatically generates a running control signal to be transmitted to the vehicle 100. By contrast, the remote control device 400 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the remote control device 400 through wire communication or wireless communication, for example, and the remote control device 400 may generate a running control signal responsive to the operation on the operating device.
(D10) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle control device 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory KJ, or a remaining component such as a bodyshell may be mounted on the vehicle 100 after the vehicle 100 is shipped from the factory KJ while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.
(D11) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.
(D12) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.
(D13) The control and the method described in the present disclosure may be realized by a dedicated computer provided by configuring a processor and a memory programmed in such a manner as to implement one or a plurality of functions embodied by a computer program. Alternatively, the controller and the method described in the present disclosure may be realized by a dedicated computer provided by configuring a processor using one or more dedicated hardware logic circuits. Still alternatively, the controller and the method described in the present disclosure may be realized by one or more dedicated computers configured using a combination of a processor and a memory programmed in such a manner as to implement one or a plurality of functions, and a processor configured using one or more hardware logic circuits. The computer program may be stored as an instruction to be executed by a computer into a computerreadable tangible non-transitory recording medium.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. A remote control invalidation device (200) comprising:
an invalidation signal transmission unit (240) configured to perform a process of transmitting a signal to a vehicle (100) operable by remote control, the vehicle having an invalidation implementation unit (119) configured to implement invalidation of the remote control, the signal being for implementing invalidation of the remote control with timing of coming of a predetermined invalidation moment, or a process of transmitting a signal to the moving object with timing of coming of the invalidation moment, the signal being for implementing invalidation of the remote control, **characterized by**
an information acquisition unit (210) configured to acquire information about a procurement status of parts to form the vehicle (100), wherein the parts include at least one module comprising at least one of a single component and joined multiple components; and
an invalidation moment determination unit (220) configured to determine the invalidation moment using the information acquired by the information acquisition unit (210).

2. The remote control invalidation device according to claim 1, wherein:
the information acquisition unit (210) is configured to acquire information about a delivery date of delivery of the vehicle (100) to a purchaser of the vehicle (100), and wherein the invalidation moment determination unit (220) changes the determined invalidation moment in response to change occurring in at least one of the information acquired by the acquisition unit (210).

3. A remote control invalidation device (200) comprising:
an invalidation signal transmission unit (240) configured to perform a process of transmitting a signal to a vehicle (100) operable by remote control, vehicle (100) having an invalidation implementation unit (119) configured to implement invalidation of the remote control, the signal being for implementing invalidation of the remote control with timing of coming of a predetermined invalidation moment, or a process of transmitting a signal to the vehicle with timing of coming of the invalidation moment, the signal being for implementing invalidation of the remote control, **characterized in that**
the vehicle (100) invalidates the remote control reversibly and then invalidates the remote control irreversibly prior to a delivery of the vehicle (100) to a purchaser of the vehicle (100).

4. The remote control invalidation device according to claim 3, further comprising:
an invalidation moment determination unit (220) configured to determine the invalidation moment, wherein the invalidation moment determination unit determines a first moment and a second moment after the first moment to be the invalidation moment, wherein
the invalidation signal transmission unit (240) is configured to perform the process of transmitting the signal, for implementing reversible invalidation of the remote control with timing of coming of the first moment and for implementing irreversible invalidation of the remote control with timing of coming of the second moment, the signal being transmitted as the signal for implementing invalidation of the remote control with timing of coming of the invalidation moment.

5. The remote control invalidation device according to claim 3, further comprising:
an invalidation moment determination unit (220) configured to determine the invalidation moment, wherein the invalidation moment determination unit determines a first moment and a second moment after the first moment to be the invalidation moment, wherein
the invalidation signal transmission unit (240) is configured to perform the process of transmitting the first signal with timing of coming of the first moment for implementing reversible invalidation of the remote control and transmitting a second signal with timing of coming of the second moment for implementing irreversible invalidation of the remote control, the process being performed as the process of transmitting the signal with timing of coming of the invalidation moment for implementing invalidation of the remote control.

6. A vehicle (100) operable by remote control, comprising:
an invalidation implementation unit (119) configured to implement invalidation of the remote control in response to coming of a predetermined invalidation moment, wherein the predetermined invalidation moment is determined using information about a procurement status of parts to form the vehicle, wherein the parts include at least one module comprising at least one of a single component and joined multiple components.

## Patentansprüche

1. Fernbedienungs-Außerkraftsetzungsvorrichtung (200), umfassend:
Außerkraftsetzungssignal-Übertragungseinheit (240), die konfiguriert ist, einen Vorgang zum Übertragen eines Signals an ein Fahrzeug (100) auszuführen, das über eine Fernbedienung bedienbar ist, wobei das Fahrzeug eine Außerkraftsetzungs-Implementierungseinheit (119) aufweist, die konfiguriert ist, eine Außerkraftsetzung der Fernbedienung zu implementieren, wobei das Signal zum Implementieren der Außerkraftsetzung der Fernbedienung mit der zeitlichen Planung eines Eintretens eines vorbestimmten Außerkraftsetzungszeitpunkts, oder eines Vorgangs zum Übertragen eines Signals an das bewegliche Objekt mit der zeitlichen Planung des Eintretens des Außerkraftsetzungszeitpunkts, wobei das Signal dem Implementieren der Außerkraftsetzung der Fernbedienung dient, **dadurch gekennzeichnet, dass**
eine Informationserfassungseinheit (210), die konfiguriert ist, Informationen zu einem Beschaffungsstatus von Teilen zu erfassen, um das Fahrzeug (100) zusammenzubauen, wobei die Teile mindestens ein Modul einschließen, das mindestens entweder eine Einzelkomponente oder mehrere zusammengefügte Komponenten umfasst; und
eine Außerkraftsetzungszeitpunkt-Bestimmungseinheit (220), die konfiguriert ist, den Außerkraftsetzungszeitpunkt unter Verwendung der Informationserfassungseinheit (210) zu bestimmen.

2. Fernbedienungs-Außerkraftsetzungsvorrichtung nach Anspruch 1, wobei:
die Informationserfassungseinheit (210) konfiguriert ist, Informationen zu einem Liefertermin zur Lieferung des Fahrzeugs (100) an einen Käufer des Fahrzeugs (100) zu erfassen, und wobei die Außerkraftsetzungszeitpunkt-Bestimmungseinheit (220) den bestimmten Außerkraftsetzungszeitpunkt als Reaktion auf eine Änderung in mindestens einer der von der Erfassungseinheit (210) erfassten Informationen ändert.

3. Eine Fernbedienungs-Außerkraftsetzungsvorrichtung (200), umfassend:
Außerkraftsetzungssignal-Übertragungseinheit (240), die konfiguriert ist, einen Vorgang zum Übertragen eines Signals an ein Fahrzeug (100) auszuführen, das über eine Fernbedienung bedienbar ist, das Fahrzeug (100) weist eine Außerkraftsetzungs-Implementierungseinheit (119) auf, die konfiguriert ist, eine Außerkraftsetzung der Fernbedienung zu implementieren, wobei das Signal des Implementierens der Außerkraftsetzung der Fernbedienung mit einer zeitlichen Planung eines Eintretens eines vorbestimmten Außerkraftsetzungszeitpunkts dient, oder einen Vorgang zum Übertragen eines Signals an das Fahrzeug mit einer zeitlichen Planung des Eintretens des Außerkraftsetzungszeitpunkts, wobei das Signal einem Implementieren der Außerkraftsetzung der Fernbedienung dient, **dadurch gekennzeichnet, dass** das Fahrzeug (100) die Fernbedienung umkehrbar außer Kraft setzt und dann die Fernbedienung vor einer Lieferung des Fahrzeugs (100) an einen Käufer des Fahrzeugs (100) unumkehrbar außer Kraft setzt.

4. Fernbedienungs-Außerkraftsetzungsvorrichtung nach Anspruch 3, ferner umfassend:
eine Außerkraftssetzungszeitpunkt-Bestimmungseinheit (220), die konfiguriert ist, den Außerkraftsetzungszeitpunkt zu bestimmen, wobei die Außerkraftsetzungszeitpunkt-Bestimmungseinheit einen ersten Zeitpunkt und einen zweiten Zeitpunkt nach dem ersten Zeitpunkt als Außerkraftsetzungszeitpunkt bestimmt, wobei
die Außerkraftsetzungssignal-Übertragungseinheit (240) konfiguriert ist, den Vorgang des Übertragens des Signals auszuführen, um eine umkehrbare Außerkraftsetzung der Fernbedienung mit einer zeitlichen Planung des Eintreffens des ersten Zeitpunkts zu implementieren und um eine unumkehrbare Außerkraftsetzung der Fernbedienung mit einer zeitlichen Planung des Eintretens des zweiten Zeitpunkts zu implementieren, wobei das Signal als das Signal zum Implementieren einer Außerkraftsetzung der Fernbedienung mit einer zeitlichen Planung des Eintretens des Außerkraftsetzungszeitpunkts übertragen wird.

5. Fernbedienungs-Außerkraftsetzungsvorrichtung nach Anspruch 3, ferner umfassend: Außerkraftsetzungszeitpunkt-Bestimmungseinheit (220), die konfiguriert ist, den Außerkraftsetzungszeitpunkt zu bestimmen, wobei die Außerkraftsetzungszeitpunkt-Bestimmungseinheit einen ersten Zeitpunkt und einen zweiten Zeitpunkt nach dem ersten Zeitpunkt als Außerkraftsetzungszeitpunkt bestimmt, wobei
die Außerkraftsetzungssignal-Übertragungseinheit (240) konfiguriert ist, den Vorgang des Übertragens des ersten Signals mit einer zeitlichen Planung des Eintretens des ersten Zeitpunkts auszuführen, um eine umkehrbare Außerkraftsetzung der Fernbedienung zu implementieren, und ein zweites Signal mit einer zeitlichen Planung des Eintretens des zweiten Zeitpunkts zu übertragen, um eine unumkehrbare Außerkraftsetzung der Fernbedienung zu implementieren, wobei der Vorgang als Vorgang des Übertragens des Signals mit einer zeitlichen Planung des Eintretens des Außerkraftsetzungszeitpunkts ausgeführt wird, um die Außerkraftsetzung der Fernbedienung zu implementieren.

6. Fahrzeug (100), das über eine Fernbedienung bedienbar ist, umfassend:
Außerkraftsetzungs-Implementierungseinheit (119), die konfiguriert ist, eine Außerkraftsetzung der Fernbedienung als Reaktion auf das Eintreten eines vorbestimmten Außerkraftsetzungszeitpunkts zu implementieren, wobei der vorbestimmte Außerkraftsetzungszeitpunkt unter Verwendung von Informationen zu einem Beschaffungsstatus von Teilen bestimmt wird, um das Fahrzeug zusammenzubauen, wobei die Teile mindestens ein Modul entweder einer Einzelkomponente oder mehrere zusammengefügte Komponenten umfassen.

## Revendications

1. Dispositif d'invalidation de télécommande (200) comprenant :
une unité de transmission de signal d'invalidation (240) configurée pour réaliser un processus de transmission d'un signal à un véhicule (100) pouvant être commandé par télécommande, le véhicule présentant une unité de mise en œuvre d'invalidation (119) configurée pour mettre en œuvre l'invalidation de la télécommande, le signal étant destiné à mettre en œuvre l'invalidation de la télécommande à l'instant où survient un moment d'invalidation prédéterminé, ou un processus de transmission d'un signal à l'objet en déplacement à l'instant où survient le moment d'invalidation, le signal étant destiné à mettre en œuvre l'invalidation de la télécommande, **caractérisé par**
une unité d'acquisition d'informations (210) configurée pour acquérir des informations sur un état de fourniture de pièces pour constituer le véhicule (100), dans lequel les pièces incluent au moins un module comprenant au moins l'un parmi un composant unique et plusieurs composants assemblés ; et
une unité de détermination de moment d'invalidation (220) configurée pour déterminer le moment d'invalidation à l'aide des informations acquises par l'unité d'acquisition d'informations (210).

2. Dispositif d'invalidation de télécommande selon la revendication 1, dans lequel :
l'unité d'acquisition d'informations (210) est configurée pour acquérir des informations sur une date de livraison de la livraison du véhicule (100) à un acheteur du véhicule (100), et dans lequel l'unité de détermination de moment d'invalidation (220) change le moment d'invalidation déterminé en réponse à un changement survenant dans au moins une des informations acquises par l'unité d'acquisition (210).

3. Dispositif d'invalidation de télécommande (200) comprenant :
une unité de transmission de signal d'invalidation (240) configurée pour réaliser un processus de transmission d'un signal à un véhicule (100) pouvant être commandé par télécommande, le véhicule (100) présentant une unité de mise en œuvre d'invalidation (119) configurée pour mettre en œuvre l'invalidation de la télécommande, le signal étant destiné à mettre en œuvre l'invalidation de la télécommande à l'instant où survient un moment d'invalidation prédéterminé, ou un processus de transmission d'un signal au véhicule à l'instant où survient le moment d'invalidation, le signal étant destiné à mettre en œuvre l'invalidation de la télécommande, **caractérisé en ce que**
le véhicule (100) invalide la télécommande de manière réversible, puis invalide la télécommande de manière irréversible avant une livraison du véhicule (100) à un acheteur du véhicule (100).

4. Dispositif d'invalidation de télécommande selon la revendication 3, comprenant en outre :
une unité de détermination de moment d'invalidation (220) configurée pour déterminer le moment d'invalidation, dans lequel l'unité de détermination de moment d'invalidation détermine un premier moment et un deuxième moment après le premier moment comme étant le moment d'invalidation, dans lequel
l'unité de transmission de signal d'invalidation (240) est configurée pour réaliser le processus de transmission du signal, afin de mettre en œuvre l'invalidation réversible de la télécommande à l'instant où survient le premier moment et afin de mettre en œuvre l'invalidation irréversible de la télécommande à l'instant où survient le deuxième moment, le signal étant transmis en tant que signal pour mettre en œuvre l'invalidation de la télécommande à l'instant où survient le moment d'invalidation.

5. Dispositif d'invalidation de télécommande selon la revendication 3, comprenant en outre :
une unité de détermination de moment d'invalidation (220) configurée pour déterminer le moment d'invalidation, dans lequel l'unité de détermination de moment d'invalidation détermine un premier moment et un deuxième moment après le premier moment comme étant le moment d'invalidation, dans lequel
l'unité de transmission de signal d'invalidation (240) est configurée pour réaliser le processus de transmission du premier signal à l'instant où survient le premier moment afin de mettre en œuvre l'invalidation réversible de la télécommande et de transmission d'un deuxième signal à l'instant où survient le deuxième moment afin de mettre en œuvre l'invalidation irréversible de la télécommande, le processus étant réalisé en tant que processus de transmission du signal à l'instant où survient le moment d'invalidation afin de mettre en œuvre l'invalidation de la télécommande.

6. Véhicule (100) pouvant être commandé par télécommande, comprenant :
une unité de mise en œuvre d'invalidation (119) configurée pour mettre en œuvre l'invalidation de la télécommande en réponse à la survenue d'un moment d'invalidation prédéterminé, dans lequel le moment d'invalidation prédéterminé est déterminé à l'aide d'informations sur un état de fourniture des pièces pour constituer le véhicule, dans lequel les pièces incluent au moins un module comprenant au moins l'un parmi un composant unique et plusieurs composants assemblés.
